# EUROPEAN PATENT SPECIFICATION

(11) **EP 4 751 416 B1**
(45) Date of publication and mention of the grant of the patent: **11.11.2026**
(21) Application number: 23750584.7
(22) Date of filing: 26.07.2023
(51) Int. Cl.: H04L 9/40, H04M 3/22, H04W 12/80

(54) **UPDATING LAWFUL INTERCEPTION DATA DELIVERY**
AKTUALISIERUNG DER BEREITSTELLUNG RECHTMÄSSIGEN ABFANGDATEN
MISE À JOUR DE DISTRIBUTION DE DONNÉES D'INTERCEPTION LÉGALE

(43) Date of publication of application: 03.06.2026
(73) Proprietor: Telefonaktiebolaget LM Ericsson (publ), 164 83 Stockholm (SE)
(72) Inventor: CELOZZI, Giuseppe, 80125 Napoli (IT); CIONE, Domenico Raffaele, 81100 Caserta (IT); GIORGIO GAGGIA, Antonio, 84127 Salerno (IT)
(74) Representative: Ericsson
(86) International application number: PCT/EP2023/070775
(87) International publication number: WO 2025/021303

(56) References cited:
- RAPPORTEUR: "TS 103 221-1 with agreed CRs implemented", vol. TC LI Lawful Interception, 4 July 2023 (2023-07-04), pages 1 - 59, XP014457529, Retrieved from the Internet <URL:ftp://docbox.etsi.org/LI/LI/05-CONTRIBUTIONS/2023/LI(23)P63065_TS_103_221-1_with_agreed_CRs_implemented.zip> [retrieved on 20230704]
- NOKIA CORPORATION: "ADMF Redundancy (an analysis)", vol. TC LI Lawful Interception, 14 September 2022 (2022-09-14), pages 1 - 49, XP014441745, Retrieved from the Internet <URL:ftp://docbox.etsi.org/LI/LI/05-CONTRIBUTIONS/2022/LI(22)P61041_ADMF_Redundancy__an_analysis_.pdf> [retrieved on 20220914]

## Description

### TECHNICAL FIELD

The disclosure relates to a method for updating Lawful Interception, LI, data delivery to Mediation and Delivery Function, MDF, devices. The disclosure also relates to a network node, a computer program and a carrier containing the computer program.

### BACKGROUND

European Telecommunications Standards Institute (ETSI) Technical Committee on Lawful Interception (TC LI) has started a study investigation to improve flexibility on the internal X interfaces by introducing multiple endpoints scenarios subject to agreement between Administration Function (ADMF) and Network Element (NE) and/or Network Function (NF) entities.

Specifically, starting from Technical Specification (TS) 103 221-1 v.1.11.1 (February 2022), the ETSI X interfaces cover the new feature of Destination Identifier Set (DSID) Object which allows ADMF to order NE/NFs delivering on multiple X2/X3 links subject to different preference options.

The ETSI investigation study is left open to evaluate any possible new use case relevant to progress the whole LI solution to fulfil new requirements and technology related items. The handling of Destination Identifiers (DID) has become more flexible in the current standard implementation by accepted handling redundancy of destinations on the node side as specified by (TS) 103 221-1 v.1.13.1 (December 2022).

Intercepted traffic is delivered by the NE/NF to a Destination. Each Destination is uniquely identified by a DID and is handled independently from details of a Task. DIDs can optionally be grouped with individual DID preference weightings as part of a Destination Set. Destination Sets specify an action, which defines how DIDs within the Destination Set are used; Destination Sets are uniquely identified by their Generic Object ID, which is referred to as the DSID. Each Task is associated with one or more Destinations or Destination Sets. Prior to associating a Task with a given DID or DSID, it is required that a Destination with the DID, or Destination Set with the DSID has already been created but there is no requirement that a connection has been successfully established for that DID or DSID.

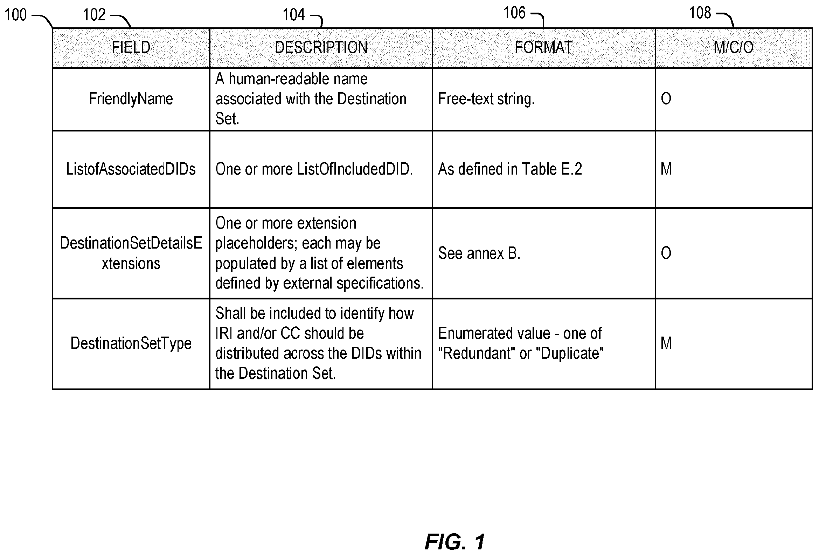

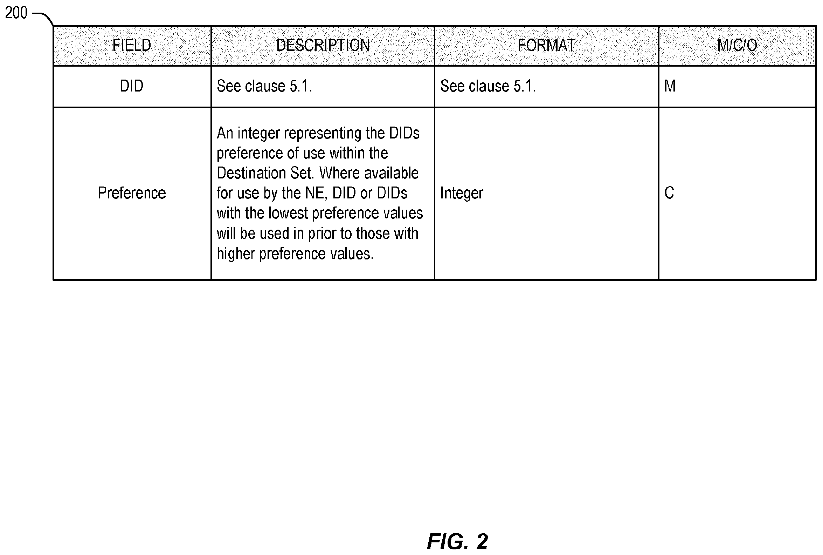

A DestinationSetDetails object 100 is depicted in Figure 1 and includes several fields 102, descriptions 104 of each field, formats 106 of each field, and whether each field is mandatory, optional, or conditional (108). The fields 102 include a Field titled ListOfAssociatedDIDs, which has a format that is further defined in ListOfAssociatedDIDs object 200 in Figure 2.

Where the DestinationSetType in the DestinationSetDetails 100 is "Redundant" the Point of Interception (POI) will use the specified DIDs as a set of redundant end points, it is mandatory for the "Preference" to be defined for each DID within a Destination Set where the DestinationSetType is "Redundant". Preference defines the DIDs order of use with the smallest integer indicating the most preferred DID(s). Should the most preferred DID(s) become unavailable the next preferred and available DID(s) shall be used.

It is an implementation decision for the NF to determine whether to duplicate traffic if two or more DIDs with the same Preference value are referenced within the same DestinationSetDetails object 100. Where the DestinationSetType included within the DestinationSetDetails is "Duplicate", the NE will send copies of intercepted traffic to all DIDs within the set, preference shall not to be included where the DestinationSetDetails is of type "Duplicate".

The new standard, described in (TS) 103 221-1 v.1.13.1 (December 2022) allows for the ADMF to specify multiple X2/X3 destinations limited to indicated preference policy of redundant and duplicated delivery. In case of redundant indication, the node defines the actual X2/X3 delivery point just based on the preference predefined order from ADMF and by checking any possible link failure on the indicated addresses. So far though, a complete LI Solution is not defined to include logic to modify the X delivery between nodes by adding delivery updates other than the ones detected on X link failure. The standard also does not address how the transfer of data is coordinated between the Node and the ADMF or the Mediation and Delivery Function (MDF) and specifies only destination change based on the loss of connection. Furthermore, the current LI solution has been noted with limited flexibility as only duplication or redundancy must be chosen without any indication on a coordinated ready action between node and ADMF/MDF. In essence, the current LI solutions are not suited to cover Law Enforcement Agency (LEA) requests for new Communication Service Provider (CSP) interception scenarios that demand to optimize the load distribution and the availability of the delivery of the data, i.e., to minimize the overall probability of loss of data and the processing time (i.e., in case buffering is necessary because mediation capacity is nearly or completely saturated).

### SUMMARY

An object of the invention is to improve load distribution and delivery of Lawful Interception (LI) data.

The present disclosure provides a method for updating LI data delivery to a Mediation and Delivery Function (MDF) devices. An LI Administration Function (ADMF) device of a core network can receive a status notification message over an X1 interface about a status of a first MDF device, and then determine, based on the status notification message to modify a data flow destination of a network function (NF). The LI ADMF device can then provide to the NF, via the X1 interface, a modification message that instructions the NF to modify the data flow destination. The modification message can either include an instruction to modify the data flow destination for one or more tasks or for all tasks. Alternatively, the modification message can either modify a preference order of a MDF devices for either one or more tasks or for all tasks.

In an embodiment, a method for updating LI data delivery to a MDF devices performed by an LI ADMF device can include receiving from a first MDF device of the MDF devices, a status notification message over an X1 interface about a status of the first MDF device. The method can include determining, based at least in part on the status notification message, to modify a data flow destination. The method can include providing, to the network function, via an X1 interface, a modification message that instructs the network function to modify the data flow destination.

In an embodiment, a network node is provided that implements an LI ADMF device that is configured to update LI data delivery to a MDF devices. The network node can include processing circuitry that can receive from a first MDF device of the MDF devices, a status notification message over an X1 interface about a status of the first MDF device. The processing circuitry can determine, based at least in part on the status notification message, to modify a data flow destination. The processing circuitry can also provide, to the network function, via an X1 interface, a modification message that instructs the network function to modify the data flow destination.

In another embodiment, a computer program can be provided that includes instructions that when executed on at least one processor cause the processor to perform the methods above. Additionally, a carrier can be provided that contains the computer program, where the carrier is one of an electronic signal, an optical signal, a radio signal, or a computer readable storage medium.

An advantage of the dynamic load distribution described herein is the ability to handle overload of a connection to an MDF device and reducing buffering of data on the node. Another advantage is improved availability in the case of software updates on the LI ADMF device or MDF device, wherein in the case of software updates, the data delivery destination can be modified to another MDF device. Another advantage is that if link performance between a NF and an MDF device deteriorates, the LI ADMF device can switch destinations of the LI data to another MDF device. Another advantage is that energy consumption can be reduced by reducing the number of mediation instances active at any given time or by optimizing that path from the node to the MDF device.

### BRIEF DESCRIPTION OF THE DRAWINGS

The accompanying drawing figures incorporated in and forming a part of this specification illustrate several aspects of the disclosure, and together with the description serve to explain the principles of the disclosure.
Figure 1 illustrates a DestinationSetDetails object according to some embodiments of the present disclosure;
Figure 2 illustrates a ListOfAssociatedDIDs object according to some embodiments of the present disclosure;
Figure 3 illustrates a block diagram of some of the nodes in a lawful interception (LI) architecture that update Lawful Interception (LI) data delivery according to some embodiments of the present disclosure;
Figure 4 is a message sequence chart for updating LI data delivery according to some embodiments of the present disclosure;
Figure 5 is a flowchart of an algorithm for updating LI data delivery to load balance according to some embodiments of the present disclosure;
Figure 6 is a flowchart of an algorithm for updating LI data delivery to reduce energy consumption according to some embodiments of the present disclosure;
Figure 7 is a flowchart of an algorithm for updating LI data delivery to minimize cost path according to some embodiments of the present disclosure;
Figure 8 illustrates one example of a cellular communications system according to some embodiments of the present disclosure;
Figures 9 and 10 illustrate example embodiments in which the cellular communication system of Figure 8 is a Fifth Generation (5G) System (5GS);
Figure 11 is a schematic block diagram of a radio access node according to some embodiments of the present disclosure;
Figure 12 is a schematic block diagram that illustrates a virtualized embodiment of the radio access node of Figure 11 according to some embodiments of the present disclosure; and
Figure 13 is a schematic block diagram of the radio access node of Figure 11 according to some other embodiments of the present disclosure.

### DETAILED DESCRIPTION

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Network Node:** As used herein, a "network node" can be any type of apparatus/device in a core network or any apparatus/device that implements a core network function. Some examples of a core network node include, a computer or server host for e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like. In the following description, when stating that any of these functions, such as MDF, NF and ADMF or LI ADMF device, perform an action, such as reporting/notifying/changing, then it is to be understood that it is in practice the network node/computer/server host/LI ADMF device/MDF device that hosts the and ADMF and MDF, respectively, that performs the action.

Note that the description given herein focuses on a Third Generation Partnership Project (3GPP) cellular communications system and, as such, 3GPP terminology or terminology similar to 3GPP terminology is oftentimes used. However, the concepts disclosed herein are not limited to a 3GPP system.

The present disclosure provides a method for updating lawful interception (LI) data delivery to a Mediation and Delivery Function (MDF) devices. An LI Administration Function (ADMF) device of a core network can receive a status notification message over an X1 interface about a status of a first MDF, and then determine, based on the status notification message to modify a data flow destination of a network function (NF). The LI ADMF device can then provide to the NF, via the X1 interface, a modification message that instructions the NF to modify the data flow destination. The modification message can either include an instruction to modify the data flow destination for one or more tasks or for all tasks. Alternatively, the modification message can either modify a preference order of MDF devices for either one or more tasks or for all tasks.

An advantage of the dynamic load distribution described herein is the ability to handle overload of a connection to an MDF device and reducing buffering of data on the node. Another advantage is improved availability in the case of software updates on the LI ADMF device or MDF device, wherein in the case of software updates, the data delivery destination can be modified to another MDF device. Another advantage is that if link performance between a NF and an MDF device deteriorates, the LI ADMF device can switch destinations of the LI data to another MDF device. Another advantage is that energy consumption can be reduced by reducing the number of mediation instances active at any given time or by optimizing that path from the node to the MDF device.

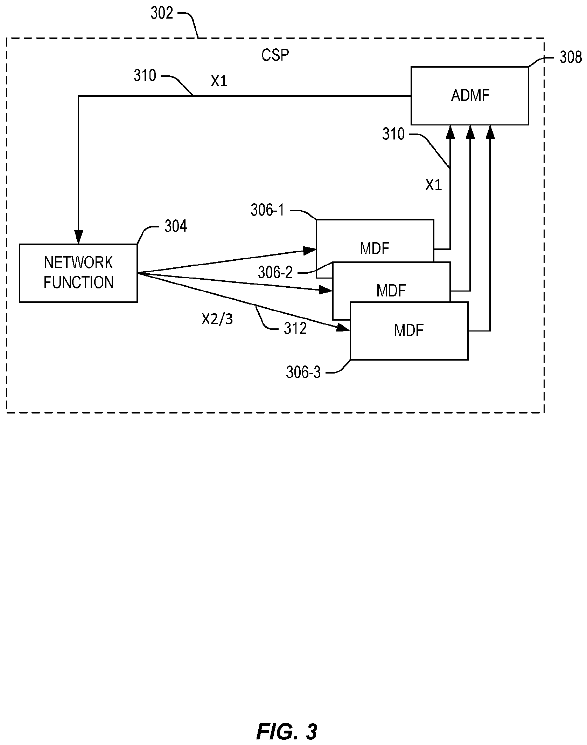

Figure 3 illustrates a block diagram of some of the nodes in an LI architecture that update LI data delivery according to some embodiments of the present disclosure.

The present disclosure provides an LI solution (covering both the interception domain with traffic nodes and the MDF aspects of a Communication Service Provider (CSP) 302 with a mechanism that develops scalability and load balancing with multiple MDF device receiving entities (MDF device 306-1, MDF device 306-2, MDF device 306-3) being addressed by LI ADMF device 308 based on its specific assessment.

Essentially, the intercepted data delivery from internal traffic node NF 304 is proposed to be feedback by the LI ADMF device 308 systems which is enhanced to modify the internal X intercepted data delivery based on flow data values measurement and settleable optimization procedures.

The present disclosure is focused on the X3 data flow 312 comprising the raw Contents of Communication (xCC) that is forwarded from the Point of Interception (POI) to the MDF device but the described concept may apply also to the X2 data flow delivery comprising Intercept Related Information (xIRI) that is also forwarded from the Point of Interception (POI) to the MDF device.

The LI ADMF device 308 can receive via an X1 interface 310 a status notification message about a status of a first MDF device (e.g., MDF device 306-1). The status notification message can be about a status of a data flow received from NF 304 or about an upcoming software update, or load level of the MDF device 306-1. The LI ADMF device 308 can determine to modify the actual intercepted data delivery point to NF 304 e.g., modify a data deliver destination, and NF 304 can then update the X3 intercepted data delivery point and deliver data via the X3 interface 312 to a new MDF device, e.g., MDF device 306-2 or MDF device 306-3. E.g., switch X3 data destination.

The proposed solution allows mediation load to be distributed to achieve better scalability according to computational resources available in the network. It can be valuable for network scenarios where MDF systems are geographically distributed.

The present disclosure provides the possibility to the LI ADMF device 308 to act both at a destination level for the entire node, e.g., tasks being intercepted by a node, but also at a task level when the granularity needs to redirect some specific tasks, i.e., users that are particularly active. By being able to distribute the xCC to different MDF points it can enable different distribution algorithms that can optimize different objective functions like total network energy consumption, and etc. A comprehensive solution that is centered on the LI ADMF device/MDF size will allow several improvements including predicting and reacting to changes in the load of the entire network and provide indications to the nodes of which is the destination to be used to provide a solution for the entire network.

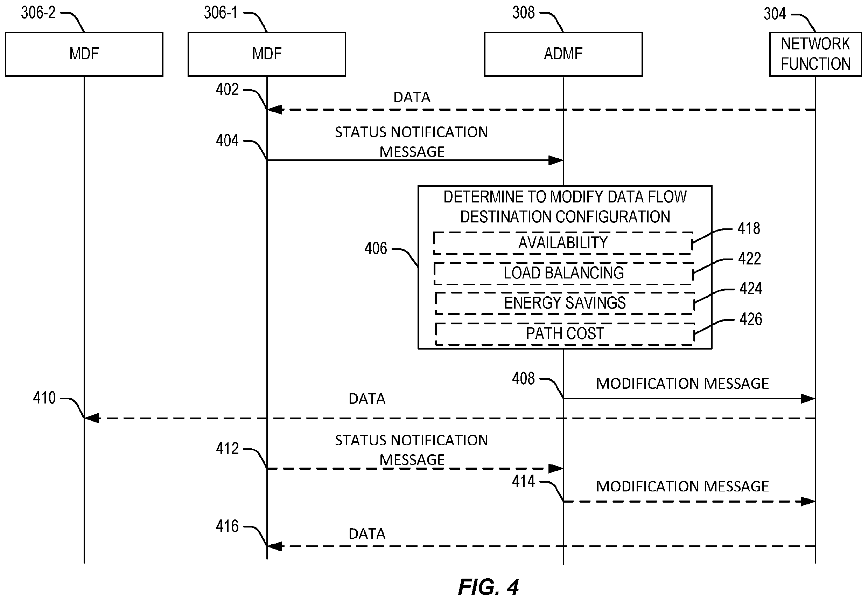

Figure 4 is a message sequence chart for updating LI data delivery according to some embodiments of the present disclosure.

As described above, the MDF device 306-1 can provide, at step 404, a status notification message to the LI ADMF device 308 via an X1 interface comprising information about a status of the MDF device 306-1. In an optional embodiment, the status notification message can be in response to data delivery at step 402 to the MDF device 306-1 from an NF 304, and include information relating to the data delivery at 402.

The status notification message can be a report message similar to that defined in clause 4.1.4 of (TS) 103 221-1 v.1.13.1 (December 2022).

In case the MDF device 306-1 reports an overload event NotifyEvent(Event=TrafficOverload,List of the most active XID)

In case the MDF device 306-1 wants to report an upgrade event NotifyEvent(Event= UpgradePreparation /UpgradeCompleted)

In case the MDF device 306-1 periodically reports the current load event NotifyEvent(Event=LoadNotification, in:CurrentLoadLevel)

In case the LI ADMF device 308 wants to get from the MDF device the total load for each Node
GetNodeLoadList(NodeLevelList,CurrentLoadLevel for each Node (e.g., UPF))

In case the LI ADMF device 308 wants to get from the MDF device the list of the top n XID
GetXIDLoad get the load of the list of the top n XID (Current Load Level for each XID)

The format of the status notification message can be shown in the following tables:

**Table 1**

| Name | Description | Format | *M*/*C*/ *O* |
|---|---|---|---|
| *XID* | XID identifier | XID | *M* |
| *XID average load value* | The average load value in percentage overall XID in the last hour / notification period | float | *M* |

**Table 2**

| Table Node List: ListOfNodesLoadLevelFi eld | Description | Format | *M*/*C*/ *O* |
|---|---|---|---|
| *Node* | Details of the NEs on which the task is applicable | NEID or GID | *M* |
| *CurrentLoadLevel* | *A percentage from 1 to 100* | *float* | *M* |

Event List: New events to be notified:

**Table 3**

| *Name* | *Description* |
|---|---|
| LoadNotification | MDF3 reports the current load level |
| TrafficOverload | MDF3 reports an overload situation |
| UpgradePreparation | *MDF3 reports an upgrade is in preparation* |
| UpgradeCompleted | *MDF3 reports an upgrade is in completed* |

Based at least partly on the status notification message received at 404, the LI ADMF device 308 can determine, at step 406, to modify a data flow destination configuration of the NF 304, and at step 408 provide a modification message via the X1 interface, to the NF 304.

The determination to modify the data flow at step 406 can be based at least in part on availability 418, load balancing 422, energy savings 424, or path cost 426.

The availability 418 on which the determination is made to modify the data flow can be due to software updates or other circumstances that would make MDF device 306-1 unavailable. Any MDF device can offload the node traffic to others while performing the SW update. Additionally, the LI ADMF device 308 can improve availability in case a link performance is worsening. The load on the MDF device 306-1 or the link health state can be the triggers for the switch of connection. This can be done when an anomaly on the link performances or availability (if there is a detection of packet loss or delay on the data transfer).

As an additional advantage over deterministic algorithms, Machine Learning (ML) algorithms can be used also to "predict" when it is better to switch traffic keeping to a minimum the loss of data or the buffering on the node side when there is a downtime. ML algorithms that can improve the throughput reducing the cost of the transfer.

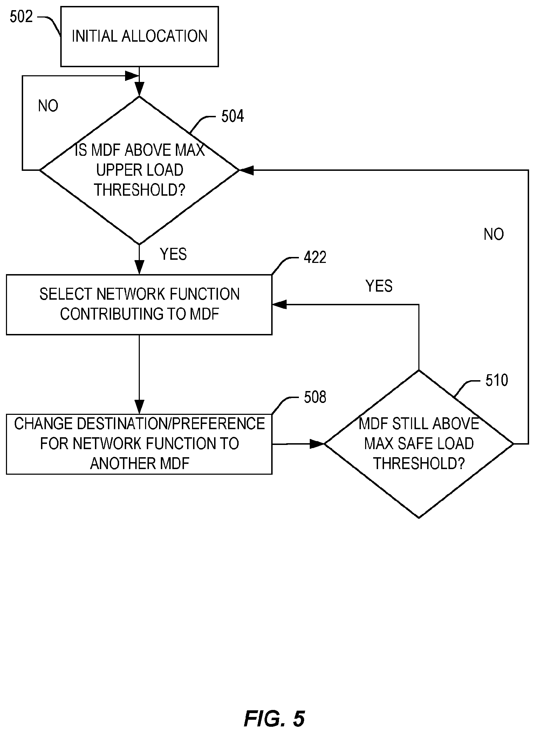

The load balancing 422 can be described with further detail in reference to Figure 5. But briefly as an overview, two MDF devices 306-1 and 306-2 can offload some of the node traffic between them. The preferred approach is to optimize the load distribution and the availability of the delivery of the data, i.e., to minimize the overall probability of loss of data and the processing time (in case buffering is necessary because mediation capacity is nearly or completely saturated).

When load balancing, the determining of whether to switch of connections from one destination to another at task or the entire node level is performed without loss of traffic if the handover is coordinated, and the old destination is switched over only when the new one is receiving packets. This can be achieved in different ways, for instance with a duplication of packets on the two destinations (e.g., MDF device 306-1 and MDF device 306-2) until the new connection is up or the switch must be done when data is not on going, the choice to this regard is left to the implementation. The solution proposed in the present disclosure can handle the case of the loss of connection or in case there is overload on the connection between the node and LI ADMF device/MDF device before this happens, this is an improvement compared to the solution proposed in the CR that in such cases will require buffering of data on the node.

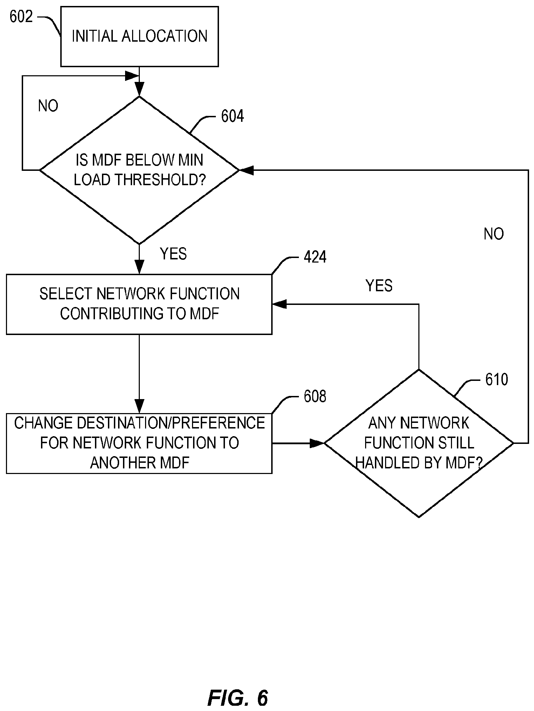

The energy savings 424 can be described with further detail in reference to Figure 6. But briefly as an overview, the energy savings at 424 can be accomplished by reducing the number of mediation instances active at any given time or optimizing the path from the node to the MDF device choosing the closest MDF device instance. Based on the traffic profiles and/or the actual traffic (or on statistics collected or based on ML prediction) on the network part of the traffic can be moved from on instance of the MDF device3 to another and turn off the unnecessary ones

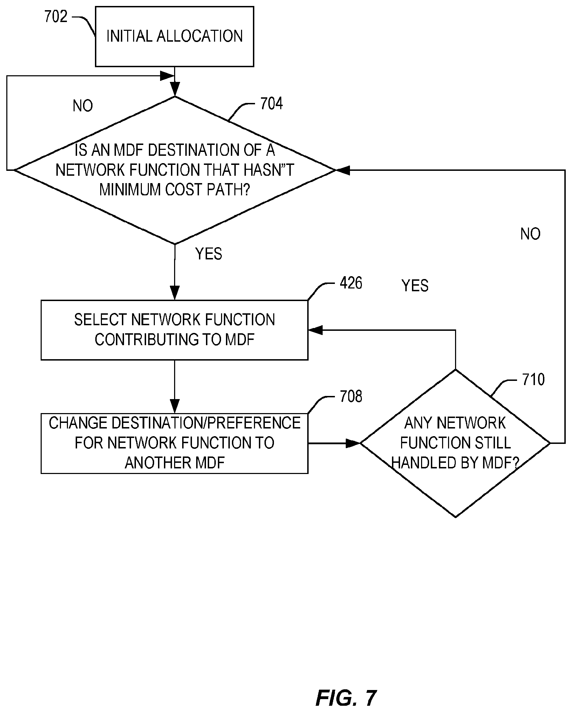

The path cost 426 can be described with further detail in reference to Figure 7. But briefly as an overview, the path cost at 426 incorporates some knowledge of the cost associated to each path from the NF 304 to the MDF device 306-1 and MDF device 306-2 that could allow the distribution of load to optimize the therefore reduce the overall network energy consumption using the shortest delivery path based on the energy cost of the links to be used instead of the capacity in different data of the MDF to support the delivery. Knowing the cost of a path from the node to the MDF and redirecting the node traffic from an MDF device to another can reduce the cost of the data transfer. If, in fact, the LI ADMF device/MDF device has access to the cost function of the underlying transport network it can assign destination in a way as to optimize the total network cost.

Other cost functions based on different calculations based on minimizing the path to the MDF device or to the cost of energy in different locations where the MDF devices are located can also be defined based on the modifications in the algorithms proposed in this IVD.

Choosing the path from the node to the mediation that has minor cost can reduce the total cost at network level. This is normally achieved by reducing the number of hops to be traversed or based on a different cost function on the underlying transport network.

After the NF 304 receives the modification message at step 408, the NF 304 can then optionally provide a new data delivery top MDF device 306-2 at step 410.

In an embodiment where the first MDF device 306-1 was going offline temporarily for a software update, or was temporarily overloaded, once the conditions change, at step 412, the MDF device 306-1 can send another status notification message that the MDF device 306-1 is now available. Then, at step 414, the LI ADMF device 308 can provide another modification message to the NF 304 to revert the data flow at step 416 back to the MDF device 306-1. In an embodiment, the status notification message at step 412 is a status of load of all the MDFs that is collected which is done periodically from all the MDFs so that in case the load has to be moved from an MDF when a "overload" or a "maintenance update" notification occurs the LI ADMF device can decide where to move the tasks or the complete MDF load so that also the other MDFs don't go above the overload threshold.

In an embodiment, the modification message sent at step 408 can be a ModifyDestination message via the X1 interface 310 where all the tasks of the NF 304 that use the indicated Destination Identifiers (DID) will be "ordered" to change the destination delivery point of MDF device 306-1. Depending on the NF 304 implementation, the NF 304 may not be possible to modify some or all Destination details while the Destination is in use. If the NF 304 cannot modify one or more of the elements in the ModifyDestinationRequest, it can reject the entire ModifyDestinationRequest with an appropriate error response.

In an embodiment, instead of changing the destination for all tasks, the LI ADMF device 308 can use a ModifyTask instruction that instead changes only the destination delivery point for the **specified** Task.

Both messages can be used by the LI ADMF device 308 to change the MDF delivery point from MDF device 306-1 to MDF device 306-2 to which the xCC shall be sent to for a specific target defined in the task. The included new DID is already defined by LI ADMF device 308 using the CreateDestination command (see 6.3.1 of (TS) 103 221-1 v.1.13.1 (December 2022)) before the change can take place based on both the above modification messages.

Alternatively, the modification message can govern the change of the active DIDs of the X data delivery flow based on internal load figures by modifying the DIDs priority preferences within the Destination Sets (DSID) previously defined into NF 304 (CreateObject applied to DestinationSetDetails object, ref. clause 6.8.1 and Annex E of (TS) 103 221-1 v.1.13.1 (December 2022)).

The solution introduces a new logic implying the changes of the actual MDF delivery points by means of direct LI ADMF device 308 orders modulating the operative destination preferences (e.g., the preferences active on the NF 304). It is proposed to introduce two new messages.

ModifyDestinationPreference(), ModifyTaskDestinationPreference() that will change the actual preferences of the destinations within a DSID according to the indication coming from the LI ADMF device as soon as it is received, e.g., similarly to the situation when an X link is in failure and a DID switch applies. The actual DID preferences shall be managed by NF 304 in a way that will define a new primary (top preference) destination and if needed the old destination can either get a lower priority (so that eventually will be used only as a backup solution in case of failure of the top preference) or set as preference 0 that shall indicate it in practice as not available (i.e. for the time that it takes to perform a sw update). The *ModifyTaskDestinationPreference* can be applied to more than one task with a bulk update for efficiency).

The present disclosure will add a further value, adding "Dynamic-Redundantʺʺ, for the DestinationSetType within the table shown in Figure 1.

This "Dynamic-Redundant" preferences may be directly modulated by LI ADMF device 308 on the original redundant DSID preference list to an effective list used by NF 304 to deliver X data towards MDF devices 306. There is no need to define a new DSID and to assign it to a node/task but just re-defining a preference list for the actual delivery from NF 304 to MDF device 306-1 or MDF device 306-2.

The reverse to the initial DSID preference list is restored by the LI ADMF device 308 using again the ModifyDestinationPreference(), ModifyTaskDestinationPreference() messages or in case of node failure at restart the node will use the initial list.

The actual new preference list may be considered by NF 304 as the "implementation detailing" of the original preference list defined for that DSID.

With reference to the Dynamic- Redundant type, the change is considered a "forced" mandatory operative change at least for the next transfer of data due to a new interception. Furthermore, whether if there is a coordination between MDF device instances, the destination change could be implemented while interception is still active. Furthermore, it is proposed to define a special new priority value, i.e., value "0", to mark the related DID value as "not anymore available" for delivery.

When changing the destination preference order, in case of N=3, LI ADMF device 308 will use the modification message for destination to manage the changing of the DIDs preferences from an initial situation to a new operative condition as follows. The DID in the ListOfAssociatedDIDs set can be "DID1, priority 1; DID2, priority 2; DID3 priority 3". Following to the new modification preferences, the ListOfAssociatedDIDs set can be "DID3, priority 1; DID2, priority 2; DID1 priority 3". The new operative preference setting may be managed also for specific use cases limited in time. For such cases, as, the LI ADMF device 308 can revert the preference order to the DIDSetInitial with a modification message at step 414 after the tasks are complete, or after a predetermined length of time, or after another status notification message is sent (e.g., step 412). In an embodiment, the modification message sent at step 414 to revert, can be RestoreDestinationPreference() or RestoreTaskDestinationPreference().

An updated DestinationSetDetails Object table that is operable with the techniques disclosed herein is provided:

**Table 4**

| ***Field*** | *Description* | *Format* | *M*/*C*/ *O* |
|---|---|---|---|
| ***FriendlyName*** | *A human-readable name associated with the Destination Set* | *Free-text string.* | *O* |
| ***ListOfIncludedDID*** | *One or more ListOfIncludedDID* | *As defined in Table A2.2.2* | *M* |
| ***DestinationSetDetailsExtensions*** | *One or more extension placeholders; each may be populated by a list of elements defined by external specifications* | *See annex B.* | *O* |
| ***DestinationSetType*** | *Shall be included to identify how HI2 and*/*or HI3 should be distributed across the DIDs within the Destination Set* | *Enumerated value - one of "Redundant" or "Duplicate" or "Dynamic-Redundant"* | *M* |

*Where the DestinationSetType included within the DestinationSetDetails is "Dynamic-Redundant" the POI is requested to manage an operative Preference setting (in addition to the DSID values set) based on direct modification requests by ADMF by means of dedicated modification messages on X1.*

The ListOfAssociatedDIDs structure is defined as follows:

**Table 5**

| **Field** | **Description** | **Format** | **M/C/O** |
|---|---|---|---|
| DID | See clause 5.1. | See clause 5.1. | M |
| Preference | An integer representing the DIDs preference of use within the Destination Set. Where available for use by the NE, DID or DIDs with the lowest preference values will be used in prior to those with higher preference values. If 2 integers with the same value are defined then this means they must be both used in a redundant way and the payload sent to both. | Integer. | C |
| | A new value 0 shall be defined so that ADMF can set a DID to not available. | | |

Figure 5 is a flowchart of an algorithm for updating LI data delivery to load balance according to some embodiments of the present disclosure.

Figure 5 summarizes the algorithm to reallocate nodes from MDF device 306-1 to MDF device 306-2 in case of overload of MDF device 306-1. The algorithm is based on a certain load level the LI ADMF device 308 monitors on all the MDF devices that are currently processing the payload and based on the information on the current load level and the statistics on the payload generated by the single tasks on a node and the current load level of the MDF device 306-1 instance decides to start redirecting some tasks or the entire node towards MDF device 306-2 that is less loaded.

For each MDF device 306 there is an MDF max load upper threshold and an MDF max load lower threshold.

At step 502, the initial DID allocation can be performed. In an embodiment, this can be performed based on a location distance criteria (where MDF device 306-1 is the closest to NF 304 based on the network distance).

At step 504 it is determined whether any MDF is above the MDF max load upper threshold. If the MDF device 306-1 is not above the MDF max load upper threshold, then the destination configuration or DID allocation is not modified until step 504 repeats at some other time. If the MDF max load upper threshold is met however, then a NF that is currently assigned to MDF device 306-1 is selected, and at step 422, the LI ADMF device 308 determines that another MDF device other than MDF device 306-1 has a load below a max load safe threshold that is lower than the max load upper threshold.

The load of a MDF device 306 is considered as the throughput of the MDF device 306 (voice, video, text messages) normalized in some way in the chosen time interval. The time interval can be the last 1-hour or alternatively some other time period could be considered like the last 6-hours or the last day using the average per hour to make the time interval comparable. In an embodiment, the load could also be a forecast based on a ML/AI prediction.

The LI ADMF device 308 can then modify at step 508 the destination preference of the NF 304 to the MDF device 306-2 and then at 510, the LI ADMF device 308 can determine whether the load of the MDF device 306-2 is above a max load safe threshold. If the load is above the max load safe threshold, the load balancing is repeated at step 422. If the load is not above the max load safe threshold, then the process goes back to step 504 to determine whether any MDF is above the MDF max load upper threshold.

Figure 6 is a flowchart of an algorithm for updating LI data delivery to reduce energy consumption according to some embodiments of the present disclosure.

As in Figure 5 at step 502, at step 602 the initial DID allocation can be performed. At step 604, the LI ADMF device 308 determines whether any MDF is below a min load lower threshold. If no MDF is below the MDF min load lower threshold, then the destination configuration or DID allocation is not modified until step 604 repeats at some other time. If the MDF min load lower threshold is met however, then a NF that is currently assigned to MDF device 306-1 is selected, and at step 424, the LI ADMF device 308 determines that another MDF device (e.g., MDF device 306-2) other than MDF device 306-1 has a load above the MDF min load lower threshold. Then at step 608, the LI ADMF device 308 changes the destination preference for the NF 304 to the MDF device 306-2, which results in fewer MDFs operational, resulting in energy savings. At step 610, the LI ADMF device determines whether any other NF is still being handled by the MDF 306-1, and if so, then that NF has a modification message sent at step 424. If not, then the process repeats at step 604.

Figure 7 is a flowchart of an algorithm for updating LI data delivery to minimize cost path according to some embodiments of the present disclosure.

At step 702 the initial DID allocation can be performed.

At step 704, the LI ADMF device 308 determines whether any MDF is the destination of any NF that does have a minimum cost path. If no, then the destination configuration or DID allocation is not modified until step 704 repeats at some other time. If an MDF has a destination from an NF that isn't a minimum cost path however, then then a NF that is currently assigned to MDF device 306-1 is selected, and at step 426, the LI ADMF device 308 determines that a cost path of the data flow from the network function (304) to the MDF device 306-1 exceeds a path cost of another MDF device 306-2 or 306-3. Then at step 708, the LI ADMF device 308 changes the destination preference for the NF 304 to the MDF device 306-2, At step 710, the LI ADMF device determines whether any other NF is still being handled by the MDF device 306-1, and if so, then that NF has a modification message sent at step 426. If not, then the process repeats at step 704.

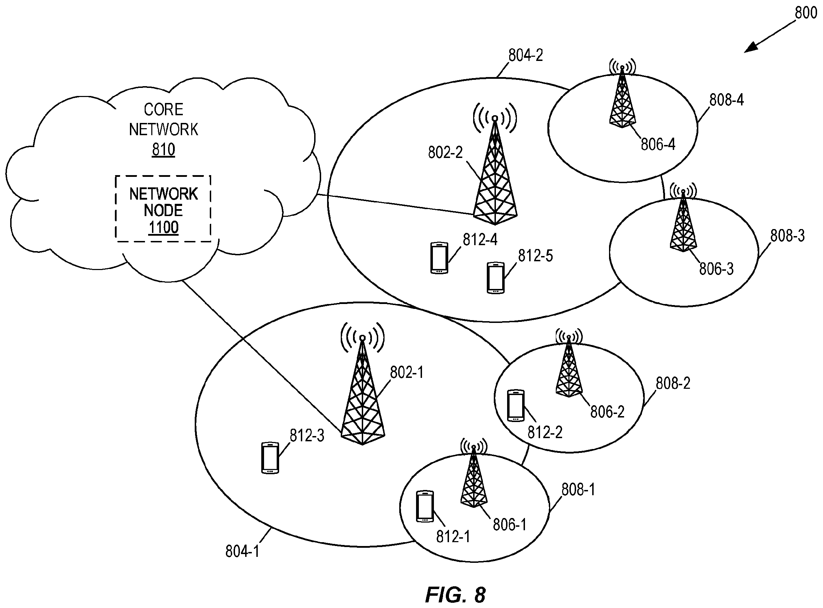

Figure 8 illustrates one example of a cellular communications system 800 in which embodiments of the present disclosure may be implemented. In the embodiments described herein, the cellular communications system 800 is a 5G system (5GS) including a Next Generation RAN (NG-RAN) and a 5G Core (5GC) or an Evolved Packet System (EPS) including an Evolved Universal Terrestrial RAN (E-UTRAN) and an Evolved Packet Core (EPC). In this example, the RAN includes base stations 802-1 and 802-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 804-1 and 804-2. The base stations 802-1 and 802-2 are generally referred to herein collectively as base stations 802 and individually as base station 802. Likewise, the (macro) cells 804-1 and 804-2 are generally referred to herein collectively as (macro) cells 804 and individually as (macro) cell 804. The RAN may also include a number of low power nodes 806-1 through 806-4 controlling corresponding small cells 808-1 through 808-4. The low power nodes 806-1 through 806-4 can be small base stations (such as pico or femto base stations) or RRHs, or the like. Notably, while not illustrated, one or more of the small cells 808-1 through 808-4 may alternatively be provided by the base stations 802. The low power nodes 806-1 through 806-4 are generally referred to herein collectively as low power nodes 806 and individually as low power node 806. Likewise, the small cells 808-1 through 808-4 are generally referred to herein collectively as small cells 808 and individually as small cell 808. The cellular communications system 800 also includes a core network 810, which in the 5G System (5GS) is referred to as the 5GC. The base stations 802 (and optionally the low power nodes 806) are connected to the core network 810.

The core network 810 can include the network node 1100 that implements the LI ADMF device 308 and/or MDF device 306 that are disclosed herein, and provide the functionality described of updating data delivery of LI data to MDFs.

The base stations 802 and the low power nodes 806 provide service to wireless communication devices 812-1 through 812-5 in the corresponding cells 804 and 808. The wireless communication devices 812-1 through 812-5 are generally referred to herein collectively as wireless communication devices 812 and individually as wireless communication device 812. In the following description, the wireless communication devices 812 are oftentimes UEs, but the present disclosure is not limited thereto.

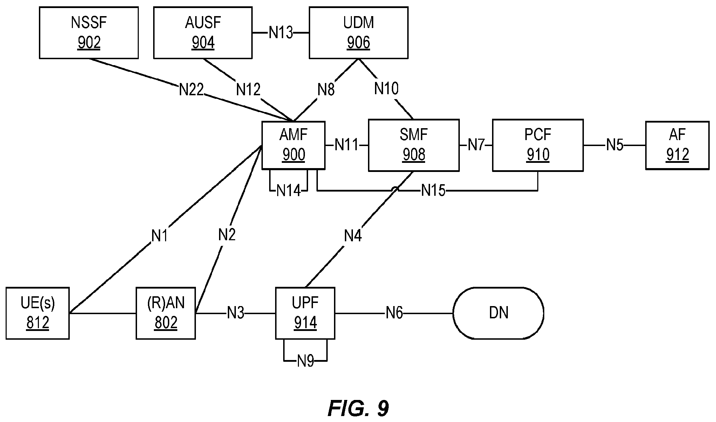

Figure 9 illustrates a wireless communication system represented as a 5G network architecture composed of core Network Functions (NFs), where interaction between any two NFs is represented by a point-to-point reference point/interface. Figure 9 can be viewed as one particular implementation of the system 800 of Figure 8.

Seen from the access side the 5G network architecture shown in Figure 9 comprises a plurality of UEs 812 connected to either a RAN 802 or an Access Network (AN) as well as an AMF 900. Typically, the R(AN) 802 comprises base stations, e.g., such as eNBs or gNBs or similar. Seen from the core network side, the 5GC NFs shown in Figure 9 include a NSSF 902, an AUSF 904, a UDM 906, the AMF 900, a SMF 908, a PCF 910, and an Application Function (AF) 912.

Reference point representations of the 5G network architecture are used to develop detailed call flows in the normative standardization. The N1 reference point is defined to carry signaling between the UE 812 and AMF 900. The reference points for connecting between the AN 802 and AMF 900 and between the AN 802 and UPF 914 are defined as N2 and N3, respectively. There is a reference point, N11, between the AMF 900 and SMF 908, which implies that the SMF 908 is at least partly controlled by the AMF 900. N4 is used by the SMF 908 and UPF 914 so that the UPF 914 can be set using the control signal generated by the SMF 908, and the UPF 914 can report its state to the SMF 908. N9 is the reference point for the connection between different UPFs 914, and N14 is the reference point connecting between different AMFs 900, respectively. N15 and N7 are defined since the PCF 910 applies policy to the AMF 900 and SMF 908, respectively. N12 is required for the AMF 900 to perform authentication of the UE 812. N8 and N10 are defined because the subscription data of the UE 812 is required for the AMF 900 and SMF 908.

The 5GC network aims at separating UP and CP. The UP carries user traffic while the CP carries signaling in the network. In Figure 9, the UPF 914 is in the UP and all other NFs, i.e., the AMF 900, SMF 908, PCF 910, AF 912, NSSF 902, AUSF 904, and UDM 906, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 900 and SMF 908 are independent functions in the CP. Separated AMF 900 and SMF 908 allow independent evolution and scaling. Other CP functions like the PCF 910 and AUSF 904 can be separated as shown in Figure 9. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

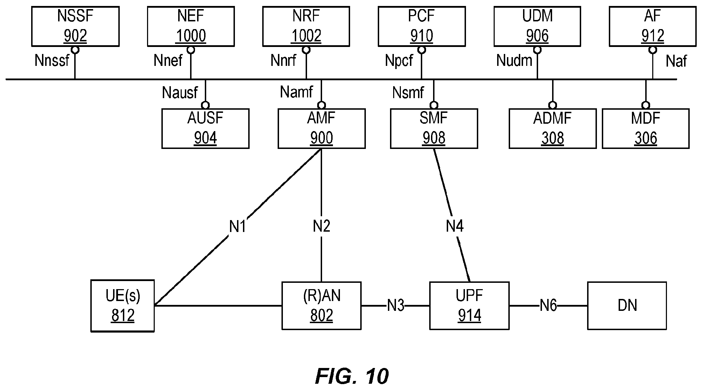

Figure 10 illustrates a 5G network architecture using service-based interfaces between the NFs in the CP, instead of the point-to-point reference points/interfaces used in the 5G network architecture of Figure 9. However, the NFs described above with reference to Figure 9 correspond to the NFs shown in Figure 10. The service(s) etc. that a NF provides to other authorized NFs can be exposed to the authorized NFs through the service-based interface. In Figure 10 the service based interfaces are indicated by the letter "N" followed by the name of the NF, e.g., Namf for the service based interface of the AMF 900 and Nsmf for the service based interface of the SMF 908, etc. The NEF 1000 and the NRF 1002 in Figure 10 are not shown in Figure 9 discussed above. However, it should be clarified that all NFs depicted in Figure 9 can interact with the NEF 1000 and the NRF 1002 of Figure 10 as necessary, though not explicitly indicated in Figure 9.

Some properties of the NFs shown in Figures 9 and 10 may be described in the following manner. The AMF 900 provides UE-based authentication, authorization, mobility management, etc. A UE 812 even using multiple access technologies is basically connected to a single AMF 900 because the AMF 900 is independent of the access technologies. The SMF 908 is responsible for session management and allocates Internet Protocol (IP) addresses to UEs. It also selects and controls the UPF 914 for data transfer. If a UE 812 has multiple sessions, different SMFs 908 may be allocated to each session to manage them individually and possibly provide different functionalities per session. The AF 912 provides information on the packet flow to the PCF 910 responsible for policy control in order to support QoS. Based on the information, the PCF 910 determines policies about mobility and session management to make the AMF 900 and SMF 908 operate properly. The AUSF 904 supports authentication function for UEs or similar and thus stores data for authentication of UEs or similar while the UDM 906 stores subscription data of the UE 812. The Data Network (DN), not part of the 5GC network, provides Internet access or operator services and similar.

The NFs also include the LI ADMF device 308 and the MDFs (e.g., MDF 306) as described herein.

An NF may be implemented either as a network element on a dedicated hardware, as a software instance running on a dedicated hardware, or as a virtualized function instantiated on an appropriate platform, e.g., a cloud infrastructure.

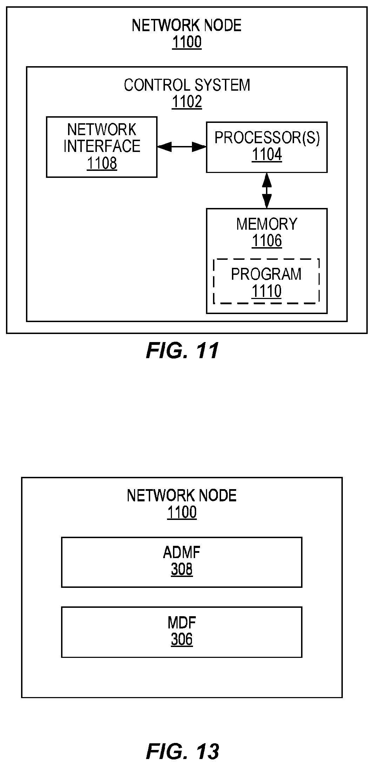

Figure 11 is a schematic block diagram of a network node 1100 according to some embodiments of the present disclosure. Optional features are represented by dashed boxes. The network node 1100 may be, for example, a network node that implements all or part of the functionality of LI ADMF device 308 or MDF 306 as described herein. As illustrated, the network node 1100 includes a control system 1102 that includes one or more processors 1104 (e.g., Central Processing Units (CPUs), Application Specific Integrated Circuits (ASICs), Field Programmable Gate Arrays (FPGAs), and/or the like), memory/computer readable storage medium 1106, and a network interface 1108. The one or more processors 1104 are also referred to herein as processing circuitry.

The one or more processors 1104 operate to provide one or more functions of a radio access node 1100 as described herein. In some embodiments, the function(s) are implemented in one or more computer programs 1110 that are stored, e.g., in the memory 1106 and executed by the one or more processors 1104.

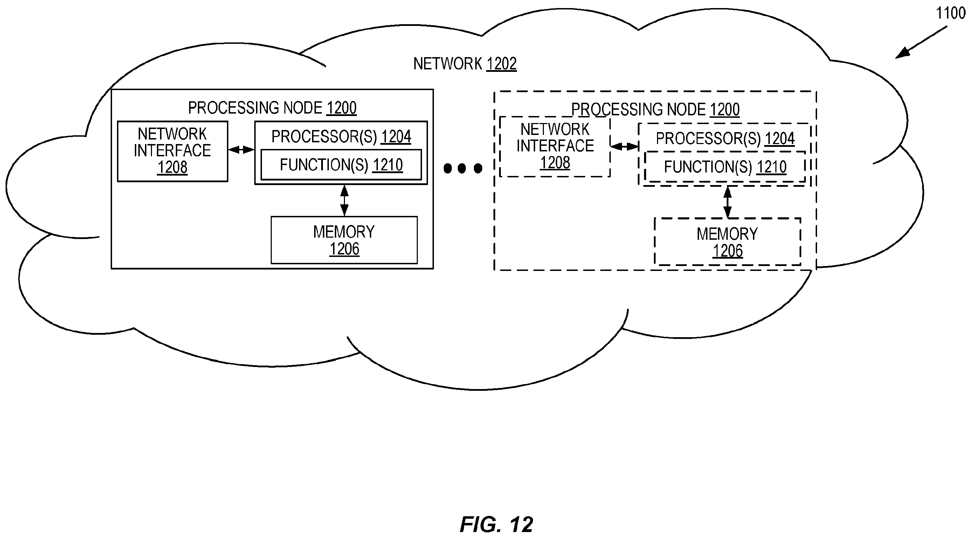

Figure 12 is a schematic block diagram that illustrates a virtualized embodiment of the network node 1100 according to some embodiments of the present disclosure. This discussion is equally applicable to other types of network nodes. Further, other types of network nodes may have similar virtualized architectures. Again, optional features are represented by dashed boxes.

As used herein, a "virtualized" network node is an implementation of the network node 1100 in which at least a portion of the functionality of the network node 1100 is implemented as a virtual component(s) (e.g., via a virtual machine(s) executing on a physical processing node(s) in a network(s)). As illustrated, in this example, the network node 1100 may include the control system 1102 and/or the one or more radio units 1110, as described above. The control system 1102 may be connected to the radio unit(s) 1110 via, for example, an optical cable or the like. The network node 1100 includes one or more processing nodes 1200 coupled to or included as part of a network(s) 1202. If present, the control system 1102 or the radio unit(s) are connected to the processing node(s) 1200 via the network 1202. Each processing node 1200 includes one or more processors 1204 (e.g., CPUs, ASICs, FPGAs, and/or the like), memory/computer readable storage medium 1206, and a network interface 1208.

In this example, functions 1210 of the network node 1100 described herein are implemented at the one or more processing nodes 1200 or distributed across the one or more processing nodes 1200 and the control system 1102 and/or the radio unit(s) 1110 in any desired manner. In some particular embodiments, some or all of the functions 1210 of the network node 1100 described herein are implemented as virtual components executed by one or more virtual machines implemented in a virtual environment(s) hosted by the processing node(s) 1200. As will be appreciated by one of ordinary skill in the art, additional signaling or communication between the processing node(s) 1200 and the control system 1102 is used in order to carry out at least some of the desired functions 1210. Notably, in some embodiments, the control system 1102 may not be included, in which case the radio unit(s) 1110 communicate directly with the processing node(s) 1200 via an appropriate network interface(s).

In some embodiments, a computer program including instructions which, when executed by at least one processor, causes the at least one processor to carry out the functionality of network node 1100 or a node (e.g., a processing node 1200) implementing one or more of the functions 1210 of the network node 1100 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the network node 1100 according to some other embodiments of the present disclosure. The network node 1100 includes one or more modules LI ADMF device 308 or MDF 306, each of which is implemented in software. The module(s) LI ADMF device 308 or MDF 306 provide the functionality of the network node 1100 described herein. This discussion is equally applicable to the processing node 1200 of Figure 12 where the modules LI ADMF device 308 or MDF 306 may be implemented at one of the processing nodes 1200 or distributed across multiple processing nodes 1200 and/or distributed across the processing node(s) 1200 and the control system 1102.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Those skilled in the art will recognize improvements and modifications to the embodiments of the present disclosure. All such improvements and modifications are considered within the scope of the concepts disclosed herein.

## Claims

1. A method for updating Lawful Interception, LI, data delivery to Mediation and Delivery Function, MDF, devices (306) performed by an LI Administration Function, ADMF, device (308), the method comprising:
receiving (404), from a first MDF device (306-1) of the MDF devices (306), a status notification message over an X1 interface (310) about a status of the first MDF (306-1);
determining (406), based at least in part on the status notification message, to modify a data flow destination; and
providing (408), to the network function (304), via an X1 interface (310), a modification message that instructs the network function (304) to modify the data flow destination.

2. A network node (1100) that implements a Lawful Interception, LI, Administration Function, ADMF, device (308), that is configured to update LI data delivery to Mediation and Delivery Function, MDF, devices (306) the network node (1100) comprising processing circuitry configured to cause the network node (1100) to:
receive (404), from a first MDF device (306-1) of the MDF devices (306), a status notification message over an X1 interface (310) about a status of the first MDF device (306-1);
determine (406), based at least in part on the status notification message, to modify a data flow destination; and
provide (408), to the network function (304), via an X1 interface (310), a modification message that instructs the network function (304) to modify the data flow destination configuration.

3. The network node (1100) of claim 2, wherein the modification message is a destination preference modification message comprising an instruction to the network function (304) to modify a preference order of the MDF devices (306) for all tasks.

4. The network node (1100) of claim 2, wherein the modification message is a task preference modification message comprising an instruction to the network function (304) to modify a preference order of the MDF devices (306) for one or more tasks.

5. The network node (1100) of claims 2 to 4, wherein the modification message comprises an instruction to modify a destination preference order of the network function (304) for a predefined preference order.

6. The network node (1100) of claim 2, wherein the status notification message comprises information about a dataflow received by the first MDF device (306-1).

7. The network node (1100) of any of claims 2 to 6, wherein the modification message is a destination modification message comprising an instruction to the network function (304) to modify the data flow destination configuration for all tasks.

8. The network node (1100) of any of claims 2 to 6, wherein the modification message is a task modification message comprising an instruction to the network function (304) to modify the data flow destination configuration for one or more tasks.

9. The network node (1100) of any of claims 2 to 8, wherein the processing circuitry is further configured to:
determine (418) from the status notification message that the first MDF device (306-1) will be unavailable.

10. The network node (1100) of claim 9, wherein the processing circuitry is further configured to:
receive (412), from the first MDF device (306-1) of the MDF devices (306), another status notification message over an X1 interface (310) that the first MDF device (306-1) is available; and
provide (414), to the network function (304), via an X1 interface (310), another modification message that instructs the network function (304) to revert the data flow destination configuration.

11. The network node (1100) of claims 2-8, wherein the status notification message indicates that the first MDF device (306-1) has a load exceeding a first predefined load threshold.

12. The network node (1100) of claims 2-8, wherein the status notification message indicates that the first MDF device (306-1) has a load below a minimum load threshold.

13. The network node (1100) of claims 2-8, wherein the status notification message indicates that a cost path of the data flow from the network function (304) to the first MDF device (306-1) exceeds path cost of another MDF device (306-2, 306-3) and wherein the modification message comprises an instruction to the network function (304) to modify the data flow destination configuration to the other MDF device (306-2, 306-3).

14. The network node (1100) of any of claims 2-13, wherein the data flow comprises at least one of content of communication data received over an X3 interface (314) or intercept related information data received over an X2 interface (312).

15. A computer program (1110) comprising instructions which, when executed on at least one processor, cause the processor to carry out the method according to claim 1.

## Patentansprüche

1. Verfahren zum Aktualisieren der Bereitstellung rechtmäßiger Abfangdaten, LI-Daten, für Mediations- und Bereitstellungsfunktions-, MDF-, Vorrichtungen (306), die durch eine LI-Verwaltungsfunktions-, ADMF-, Vorrichtung (308) durchgeführt wird, wobei das Verfahren Folgendes umfasst:
Empfangen (404) einer Statusbenachrichtigungsnachricht aus einer ersten MDF-Vorrichtung (306-1) der MDF-Vorrichtungen (306) über eine X1-Schnittstelle (310) über einen Status der ersten MDF (306-1);
Bestimmen (406) mindestens teilweise basierend auf der Statusbenachrichtigungsnachricht, um ein Datenflussziel zu modifizieren; und
Bereitstellen (408) einer Modifizierungsnachricht über eine X1-Schnittstelle (310) für die Netzwerkfunktion (304), welche die Netzwerkfunktion (304) anweist, das Datenflussziel zu modifizieren.

2. Netzwerkknoten (1100), der eine Verwaltungsfunktions-, ADMF-, Vorrichtung (308) zum rechtmäßigen Abfangen, LI, implementiert, die dazu konfiguriert ist, eine LI-Datenbereitstellung für Mediations- und Bereitstellungsfunktions-, MDF-, Vorrichtungen (306) zu aktualisieren, wobei der Netzwerkknoten (1100) eine Verarbeitungsschaltung umfasst, die dazu konfiguriert ist, zu bewirken, dass der Netzwerkknoten (1100):
eine Statusbenachrichtigungsnachricht aus einer ersten MDF-Vorrichtung (306-1) der MDF-Vorrichtungen (306) über eine X1-Schnittstelle (310) über einen Status der ersten MDF-Vorrichtung (306-1) empfängt (404);
mindestens teilweise basierend auf der Statusbenachrichtigungsnachricht bestimmt (406), um ein Datenflussziel zu modifizieren; und
eine Modifizierungsnachricht über eine X1-Schnittstelle (310) für die Netzwerkfunktion (304) bereitstellt (408), welche die Netzwerkfunktion (304) anweist, die Zielkonfiguration für Datenflüsse zu modifizieren.

3. Netzwerkknoten (1100) nach Anspruch 2, wobei die Modifizierungsnachricht eine Modifizierungsnachricht für Zielpräferenzen ist, die eine Anweisung für die Netzwerkfunktion (304) umfasst, eine Präferenzreihenfolge der MDF-Vorrichtungen (306) für alle Aufgaben zu modifizieren.

4. Netzwerkknoten (1100) nach Anspruch 2, wobei die Modifizierungsnachricht eine Modifizierungsnachricht für Aufgabenpräferenzen ist, die eine Anweisung für die Netzwerkfunktion (304) umfasst, eine Präferenzreihenfolge der MDF-Vorrichtungen (306) für eine oder mehrere Aufgaben zu modifizieren.

5. Netzwerkknoten (1100) nach Anspruch 2 bis 4, wobei die Modifizierungsnachricht eine Anweisung umfasst, um eine Zielpräferenzreihenfolge der Netzwerkfunktion (304) für eine vordefinierte Präferenzreihenfolge zu modifizieren.

6. Netzwerkknoten (1100) nach Anspruch 2, wobei die Statusbenachrichtigungsnachricht Informationen über einen Datenfluss umfasst, der durch die erste MDF-Vorrichtung (306-1) empfangen wird.

7. Netzwerkknoten (1100) nach einem der Ansprüche 2 bis 6, wobei die Modifizierungsnachricht eine Zielmodifizierungsnachricht ist, die eine Anweisung für die Netzwerkfunktion (304) umfasst, die Zielkonfiguration für Datenflüsse für alle Aufgaben zu modifizieren.

8. Netzwerkknoten (1100) nach einem der Ansprüche 2 bis 6, wobei die Modifizierungsnachricht eine Aufgabenmodifizierungsnachricht ist, die eine Anweisung für die Netzwerkfunktion (304) umfasst, die Zielkonfiguration für Datenflüsse für eine oder mehrere Aufgaben zu modifizieren.

9. Netzwerkknoten (1100) nach einem der Ansprüche 2 bis 8, wobei die Verarbeitungsschaltung ferner dazu konfiguriert ist:
aus der Statusbenachrichtigungsnachricht zu bestimmen (418), dass die erste MDF-Vorrichtung (306-1) nicht verfügbar sein wird.

10. Netzwerkknoten (1100) nach Anspruch 9, wobei die Verarbeitungsschaltung ferner dazu konfiguriert ist:
eine andere Statusbenachrichtigungsnachricht aus der ersten MDF-Vorrichtung (306-1) der MDF-Vorrichtungen (306) über eine X1-Schnittstelle (310) darüber zu empfangen (412), dass die erste MDF-Vorrichtung (306-1) verfügbar ist; und
eine andere Modifizierungsnachricht über eine X1-Schnittstelle (310) für die Netzwerkfunktion (304) bereitzustellen (414), welche die Netzwerkfunktion (304) anweist, die Zielkonfiguration für Datenflüsse rückgängig zu machen.

11. Netzwerkknoten (1100) nach Anspruch 2-8, wobei die Statusbenachrichtigungsnachricht angibt, dass die erste MDF-Vorrichtung (306-1) eine Last aufweist, die einen ersten vordefinierten Lastschwellenwert überschreitet.

12. Netzwerkknoten (1100) nach Anspruch 2-8, wobei die Statusbenachrichtigungsnachricht angibt, dass die erste MDF-Vorrichtung (306-1) eine Last unter einem Mindestlastschwellenwert aufweist.

13. Netzwerkknoten (1100) nach Anspruch 2-8, wobei die Statusbenachrichtigungsnachricht angibt, dass ein Kostenpfad des Datenflusses von der Netzwerkfunktion (304) zu der ersten MDF-Vorrichtung (306-1) die Pfadkosten einer anderen MDF-Vorrichtung (306-2, 306-3) überschreitet, und wobei die Modifizierungsnachricht eine Anweisung an die Netzwerkfunktion (304) umfasst, die Zielkonfiguration für Datenflüsse für die andere MDF-Vorrichtung (306-2, 306-3) zu modifizieren.

14. Netzwerkknoten (1100) nach einem der Ansprüche 2-13, wobei der Datenfluss mindestens eines von den Inhalten der Kommunikationsdaten, die über eine X3-Schnittstelle (314) empfangen werden, oder abfangbezogenen Informationsdaten, die über eine X2-Schnittstelle (312) empfangen werden, umfasst.

15. Computerprogramm (1110), umfassend Anweisungen, welche bei Ausführung auf mindestens einem Prozessor bewirken, dass der Prozessor das Verfahren nach Anspruch 1 durchführt.

## Revendications

1. Procédé de mise à jour de distribution de données d'interception légale, LI, à des dispositifs de fonction de médiation et de distribution, MDF, (306) réalisé par un dispositif de fonction d'administration, ADMF, d'interception légale, LI, (308), le procédé comprenant :
la réception (404), en provenance d'un premier dispositif MDF (306-1) des dispositifs MDF (306), d'un message de notification d'état sur une interface X1 (310) concernant un état du premier MDF (306-1) ;
la détermination (406), sur la base au moins en partie du message de notification d'état, de modifier une destination de flux de données ; et
la fourniture (408), à la fonction de réseau (304), par l'intermédiaire d'une interface X1 (310), d'un message de modification qui donne pour instruction à la fonction de réseau (304) de modifier la destination de flux de données.

2. Nœud de réseau (1100) qui met en œuvre un dispositif de fonction d'administration, ADMF, d'interception légale, LI, (308), qui est configuré pour mettre à jour une distribution de données LI à des dispositifs de fonction de médiation et de distribution, MDF, (306) le nœud de réseau (1100) comprenant une circuiterie de traitement configurée pour amener le nœud de réseau (1100) à :
recevoir (404), en provenance d'un premier dispositif MDF (306-1) des dispositifs MDF (306), un message de notification d'état sur une interface X1 (310) concernant un état du premier dispositif MDF (306-1) ;
déterminer (406), sur la base au moins en partie du message de notification d'état, de modifier une destination de flux de données ; et
fournir (408), à la fonction de réseau (304), par l'intermédiaire d'une interface X1 (310), un message de modification qui donne pour instruction à la fonction de réseau (304) de modifier la configuration de destination de flux de données.

3. Nœud de réseau (1100) selon la revendication 2, dans lequel le message de modification est un message de modification de préférence de destination comprenant une instruction à la fonction de réseau (304) de modifier un ordre de préférence des dispositifs MDF (306) pour toutes les tâches.

4. Nœud de réseau (1100) selon la revendication 2, dans lequel le message de modification est un message de modification de préférence de tâche comprenant une instruction à la fonction de réseau (304) de modifier un ordre de préférence des dispositifs MDF (306) pour une ou plusieurs tâches.

5. Nœud de réseau (1100) selon les revendications 2 à 4, dans lequel le message de modification comprend une instruction de modifier un ordre de préférence de destination de la fonction de réseau (304) pour un ordre de préférence prédéfini.

6. Nœud de réseau (1100) selon la revendication 2, dans lequel le message de notification d'état comprend des informations concernant un flux de données reçu par le premier dispositif MDF (306-1).

7. Nœud de réseau (1100) selon l'une quelconque des revendications 2 à 6, dans lequel le message de modification est un message de modification de destination comprenant une instruction à la fonction de réseau (304) de modifier la configuration de destination de flux de données pour toutes les tâches.

8. Nœud de réseau (1100) selon l'une quelconque des revendications 2 à 6, dans lequel le message de modification est un message de modification de tâche comprenant une instruction à la fonction de réseau (304) de modifier la configuration de destination de flux de données pour une ou plusieurs tâches.

9. Nœud de réseau (1100) selon l'une quelconque des revendications 2 à 8, dans lequel la circuiterie de traitement est en outre configurée pour :
déterminer (418) à partir du message de notification d'état que le premier dispositif MDF (306-1) sera indisponible.

10. Nœud de réseau (1100) selon la revendication 9, dans lequel la circuiterie de traitement est en outre configurée pour :
recevoir (412), en provenance du premier dispositif MDF (306-1) des dispositifs MDF (306), un autre message de notification d'état sur une interface X1 (310) selon lequel le premier dispositif MDF (306-1) est disponible ; et
fournir (414), à la fonction de réseau (304), par l'intermédiaire d'une interface X1 (310), un autre message de modification qui donne pour instruction à la fonction de réseau (304) de rétablir la configuration de destination de flux de données.

11. Nœud de réseau (1100) selon les revendications 2 à 8, dans lequel le message de notification d'état indique que le premier dispositif MDF (306-1) a une charge dépassant un premier seuil de charge prédéfini.

12. Nœud de réseau (1100) selon les revendications 2 à 8, dans lequel le message de notification d'état indique que le premier dispositif MDF (306-1) a une charge inférieure à un seuil de charge minimum.

13. Nœud de réseau (1100) selon les revendications 2 à 8, dans lequel le message de notification d'état indique qu'un coût de chemin du flux de données provenant de la fonction de réseau (304) jusqu'au premier dispositif MDF (306-1) dépasse coût de chemin d'un autre dispositif MDF (306-2, 306-3) et dans lequel le message de modification comprend une instruction à la fonction de réseau (304) de modifier la configuration de destination de flux de données vers l'autre dispositif MDF (306-2, 306-3).

14. Nœud de réseau (1100) selon l'une quelconque des revendications 2 à 13, dans lequel le flux de données comprend au moins l'un parmi un contenu de données de communication reçu sur une interface X3 (314) ou des données d'informations liées à l'interception reçues sur une interface X2 (312).

15. Programme informatique (1110) comprenant des instructions qui, lorsqu'elles sont exécutées sur au moins un processeur, amènent le processeur à réaliser le procédé selon la revendication 1.
